# EUROPÄISCHE PATENTSCHRIFT

(11) **EP 1 714 815 B1**
(45) Veröffentlichungstag und Bekanntmachung des Hinweises auf die Patenterteilung: **24.02.2010**
(21) Anmeldenummer: 06112805.4
(22) Anmeldetag: 20.04.2006
(51) Int. Cl.: B60J 5/10

(54) **Fahrzeugrolltor**
Vehicle roller door
Porte enroulable pour véhicule

(30) Priorität: 30.06.2005 DE 202005009784 U; 22.04.2005 DE 202005006531 U
(43) Veröffentlichungstag der Anmeldung: 25.10.2006
(73) Patentinhaber: WIHAG Fahrzeugbausysteme GmbH, 33602 Bielefeld (DE)
(72) Erfinder: Kottkamp, Uwe, 32312 Lübbecke (DE)
(74) Vertreter: Dantz, Jan Henning

(56) Entgegenhaltungen:
- CA-A1- 2 456 378
- US-A1- 2003 127 198
- US-A1- 2003 173 040

## Beschreibung

Die Erfindung betrifft ein Fahrzeugrolltor mit einem plattenförmiges Füllungselement, welches aus Lamellen besteht, deren einander zugewandte, quer zur Verschieberichtung verlaufende Randbereiche gelenkig miteinander verbunden sind, und bei dem die Lamellen durch seitlich nach außen im Versatz zu den beiden Stirnflächen der Lamellen stehende Führungsrollen geführt sind, die in in Verschieberichtung des Füllungselementes verlaufende, ortsfeste so wie lagegerecht zu den Führungsrollen stehende Laufschienen eingreifen, und bei dem die Führungsrollen auf Lagerbolzen frei drehbar gelagert sind, die in Lagerbolzenaufnahmen des Füllungselementes eingesetzt sind, die in abnehmbar an den Lamellen angesetzten Lagerprofilabschnitten vorgesehen sind.

Das in Rede stehende Fahrzeugrolltor wird in bevorzugter Weise zur Freigabe und zum Verschließen der heckseitigen Ladeöffnung eines kofferartigen Fahrzeugaufbaues verwendet. An den heckseitigen Endbereichen der beiden Seitenwände des Kofferaufbaus sowie an der Decke sind die Laufschienen befestigt. Wenn die Ladeöffnung zum Be- oder Entladen freigegeben wird, wird demzufolge das Füllungselement unter die Decke gefahren. Die Breite des Füllungselementes ist an die Breite des Aufbaues des Fahrzeuges angepasst. Die Anzahl der das Füllungselement bildenden Lamellen richtet sich nach der Höhe des Fahrzeugaufbaus und der Höhe der einzelnen Lamellen, die beispielsweise zwischen 20 und 30 cm beträgt.

Üblicherweise sind die Lamellen als Hohlprofile ausgebildet und aus einem geeigneten Kunststoff oder aus Aluminium gefertigt. Die Verbindungen der quer zur Verschieberichtung verlaufenden Randbereiche der Lamellen können durch Scharniere erfolgen, doch werden im Fahrzeugbau scharnierlose Ausführungen bevorzugt. Dazu sind die quer zur Verschieberichtung des Füllungselementes verlaufenden Randbereiche der Lamellen so profiliert, dass sie formschlüssig ineinander greifen, jedoch ist sichergestellt, dass die formschlüssigen Verbindungen der Lamellen sich beim Verschieben nicht lösen.

Aus der US 2003/0127198 A1 ist ein Fahrzeugrolltor bekannt, bei dem an die Lamellen in den Endbereichen Lagerbolzenaufnahmen vorgesehen sind, die durch Schrauben mit den Lamellen verbunden sind. Bei dieser Ausführung können die Laufrollen ausgewechselt werden, ohne dass das Fahrzeugrolltor demontiert werden muss. Die Verbindung mittels Schrauben ist jedoch sowohl bei der Montage als auch bei der Demontage der Lagerbolzenaufnahmen recht zeitaufwendig. Außerdem wirken die Vielzahl der benötigten Schrauben auf das Erscheinungsbild des Fahrzeugrolltores störend.

Der Erfindung liegt die Aufgabe zugrunde, ein Fahrzeugrolltor der eingangs näher beschriebenen Art in konstruktiv einfacher und kostengünstiger Weise so zu gestalten, dass mechanische Verbindungselemente entfallen.

Die gestellte Aufgabe wird gelöst, indem jede Lamelle, im Querschnitt gesehen, einen flachen Querschnittsabschnitt und einen als Hohlprofil ausgebildeten Querschnittsabschnitt aufweist, und dass zwischen den einander zugewandten Flächen jedes Lagerprofilabschnittes und dem als Hohlprofil ausgebildeten Querschnittsabschnitt ein Freiraum vorgesehen ist, in den zur Festlegung der Lagerprofilabschnitte Klemmleisten form- und/oder kraftschlüssig eingesetzt sind.

Die Lagerbolzenaufnahmen sind als Bohrungen anzusehen, in die die Lagerbolzen fest eingesetzt sind. Die Lagerprofilabschnitte sind zweckmäßiger Weise so gestaltet, dass die Lamellen des erfindungsgemäßen Fahrzeugrolltores gegen Lamellen von bereits in Betrieb genommenen Fahrzeugrolltoren austauschbar sind.

Durch die entsprechende Gestaltung der einander zugewandt liegenden Flächen kann die Klemmleiste durch Kraftaufwendung von der Stirnseite her in den angrenzenden Bereich eingeschoben werden. Notfalls muss dazu ein Hammer zur Hilfe genommen werden.

Diese form- und/oder kraftschlüssige Festlegung lässt sich konstruktiv in einfachster Weise erreichen, wenn der Freiraum zwischen den einander zugewandt liegenden Flächen jedes Lagerprofilabschnittes und dem als Hohlprofilabschnitt ausgebildeten Querschnittsabschnitt sich zumindest in dem dem flachen Querschnittsabschnitt zugewandten Bereich in Richtung zu diesem Bereich querschnittsmäßig vergrößert, und dass jeder Lagerprofilabschnitt an dem flachen Querschnittsabschnitt festgelegt ist. Die Klemmleiste kann aus Metall oder auch einem elastischen Werkstoff, beispielsweise Gummi oder einem gummiähnlichen Kunststoff bestehen. Die querschnittsmäßige Erweiterung erfolgt zweckmäßigerweise indem die einander zugewandten Flächen jedes Lagerprofilabschnittes und dem als Hohlprofil ausgebildetem Querschnittsabschnitt bogenförmig verlaufen. Außerdem entstehen dann keine scharfen Ecken und Kanten.

Die Lagerbolzenaufnahme und somit auch die Führungsrollen lassen sich lagegerecht positionieren, da, wie bereits erwähnt, jede Lamelle, im Querschnitt gesehen, den flachen Querschnittsabschnitt und den als Hohlprofil ausgebildeten Querschnittsabschnitt aufweist. Dadurch lässt sich der Lagerprofilabschnitt so gestalten und so gegenüber der Lamelle platzieren, dass die Lamellen gegenüber den herkömmlichen Lamellen austauschbar sind. Damit jede Lamelle sicher geführt ist, ist vorgesehen, dass die Lagerbolzenaufnahme an der dem als Hohlprofil ausgebildeten Querschnittsbereich abgewandten Bereich des Lagerprofilabschnittes liegt. Anders ausgedrückt, liegt jeder Lagerprofilabschnitt in einem quer zu den Laufschienen verlaufenden Randbereich der aus der Lamelle und dem Lagerprofilabschnitten gebildeten Einheit.

Zur zusätzlichen Fixierung bzw. Festlegung des Lagerprofilabschnittes ist vorgesehen, dass dieser an der dem flachen Querschnittsabschnitt zugewandten Seite und an der dem als Hohlprofil ausgebildeten Querschnittsabschnitt abgewandten Seite einen Steg des flachen Querschnittsabschnittes hintergreifenden Sicherungssteg aufweist. Bei dieser Ausführung sind, sofern die Klemmleisten am gegenüber liegenden Randbereich angeordnet sind, beide Randbereiche gesichert. Um eine materialsparende Ausführung zu erreichen, ist vorgesehen, dass der Lagerprofilabschnitt als Hohlprofilabschnitt ausgebildet ist, dass die dem flachen Teilabschnitt abgewandt liegende Fläche stufenförmig abgesetzt ist. Dadurch entstehen keine gegenüber der dem Laderaum des Fahrzeugaufbaus vorstehenden Flächen.

Die quer zu den Laufschienen verlaufenden Randbereiche sind bei der scharnierlosen Ausführung so gestaltet, dass sie gelenkig und formschlüssig ineinander greifen. Zur zusätzlichen Sicherung ist jedoch noch vorgesehen, dass jeder Hohlprofilabschnitt an der dem flachen Querschnittsabschnitt abgewandten Seite eine achsparallel zur Mittellängsachse der Lagerbolzenaufnahme verlaufende und hinterschnittene Nut aufweist. In diese hinterschnittene Nut kann dann eine zusätzliche Aushaksicherung festgelegt werden, die jedoch demontiert werden muss, sofern die Notwendigkeit besteht, die Lamellen zu demontieren bzw. das Füllungselement auseinander zu nehmen. In bevorzugter Ausführung ist diese Nut im Querschnitt T-förmig ausgebildet, so dass die Aushaksicherung einen entsprechend gestalteten und schließend in die Nut einbringbaren Kopf aufweisen müsste.

Bei den scharnierlosen Verbindungen der Lamellen wird in den Verbindungsbereich üblicherweise eine Profildichtung eingebracht. Es ist bei den gegebenen Umständen nicht auszuschließen, dass sich diese zu einer Seite hin verschiebt. Dadurch würde der jeweilige Endbereich beim Öffnen und Schließen des Tores beschädigt. Um eine solche Verschiebung zu verhindern, ist vorgesehen, dass jede Lamelle an der dem flachen Querschnittsabschnitt abgewandt liegenden Seitenbereich eine sich zumindest über die zugehörige Stirnfläche erstreckende Anlaufscheibe angeordnet ist. Bei einer seitlichen Verschiebung der Dichtung stößt dann die Stirnfläche der Dichtung gegen diese Anlaufscheibe. Zur einfachen Festlegung an der Lamelle ist vorgesehen, dass diese einen im Winkel zur Anlaufscheibe stehenden Befestigungssteg aufweist, der den zugehörigen Bereich der dem Laderaum zugewandten Fläche der Lamelle übergreift. Demzufolge bilden die Anlaufscheibe und der Befestigungssteg einen Sicherungswinkel. Der Befestigungssteg ist in bevorzugter Ausführung mittels einer Schraube an der Lamelle festgelegt.

Die Führungsrollen sind bei dem in Rede stehenden Fahrzeugrolltor immer den zwei einander zugewandten Randbereichen zugeordnet. Dadurch ist eine ausreichende Führung beider Lamellen sichergestellt. Bei der bodenseitigen Lamelle fehlt jedoch an dem bodenseitigen Rand die Führung. Es ist deshalb in weiterer Ausgestaltung vorgesehen, dass diese Lamelle des Fahrzeugrolltores an beiden quer zur Verschieberichtung verlaufenden Randbereichen angrenzend an die Stirnflächen mit abnehmbaren Lagerprofilabschnitten versehen ist. Die Lagerprofilabschnitte sind querschnittsmäßig angepasst und die einander zugewandt liegenden Freiräume entsprechen den Freiräumen der gegenüberliegenden Seite. Die Festlegung kann entweder wieder durch Klemmleisten oder durch Schrauben erfolgen.

Besonders vorteilhaft ist, wenn die Lagerprofilabschnitte sich über Randbereiche der Lamellen erstrecken. Dadurch können die beiden Führungsrollen einer Lamelle einzeln ausgetauscht werden. Außerdem ist diese Ausführung materialsparend. Als Randbereiche der Lamellen sind die Bereiche zu sehen, die sich an die ortsfesten Laufschienen anschließen. Die Lamellen sind so gestaltet, dass die äußeren und sichtbaren Flächen glattflächig sind. Demzufolge sollten die Lagerprofilabschnitte an den Innenseiten, dem Laderaum des Fahrzeugaufbaues, zugewandten Seiten der Lamellen montiert sein. Dadurch werden sie außerdem im geschlossenen Zustand des Fahrzeugrolltores von außen unsichtbar.

Anhand der beiliegenden Zeichnungen wird die Erfindung noch näher erläutert.

Es zeigen:
- Figur 1: eine Lamelle des erfindungsgemäßen Fahrzeugrolltores in einer Stimansicht in einer ersten Ausführung
- Figur 2: die Lamelle gemäß der Figur 1 in einer perspektivischen Darstellung mit Blick auf die dem Inneren des Fahrzeugaufbaus zugewandte Seite
- Figur 3: eine Lamelle des erfindungsgemäßen Fahrzeugrolltores in einer Stimansicht in einer zweiten Ausführung, und
- Figur 4: die Lamelle gemäß der Figur 3 in einer perspektivischen Darstellung mit Blick auf die dem Inneren des Fahrzeugaufbaus zugewandte Seite.

Aus Gründen der vereinfachten Darstellung ist das Fahrzeugrolltor als Ganzes nicht dargestellt. Das plattenförmige Füllungselement besteht aus einer von der Größe der Ladeöffnung des Aufbaus des Nutzfahrzeuges abhängigen Anzahl von Lamellen 10, die aus einem Kunststoff oder aus Aluminium gefertigt sind. Im dargestellten Ausführungsbeispiel sind die quer zu den Verschieberichtungen A verlaufenden Randbereiche der Lamellen 10 hakenförmig gestaltet, so dass die einander zugewandten Randbereiche der Lamellen 10 formschlüssig miteinander verbunden werden können. In diese formschlüssige Verbindung ist noch in nicht dargestellter Weise eine Profildichtung eingesetzt.

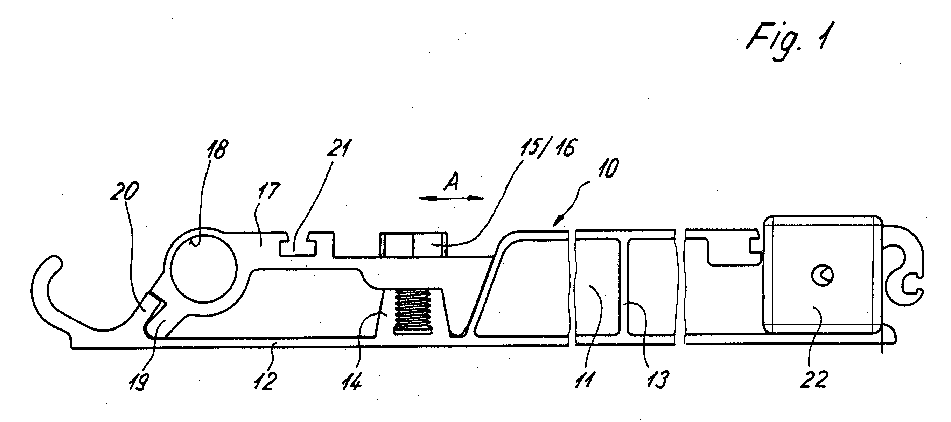

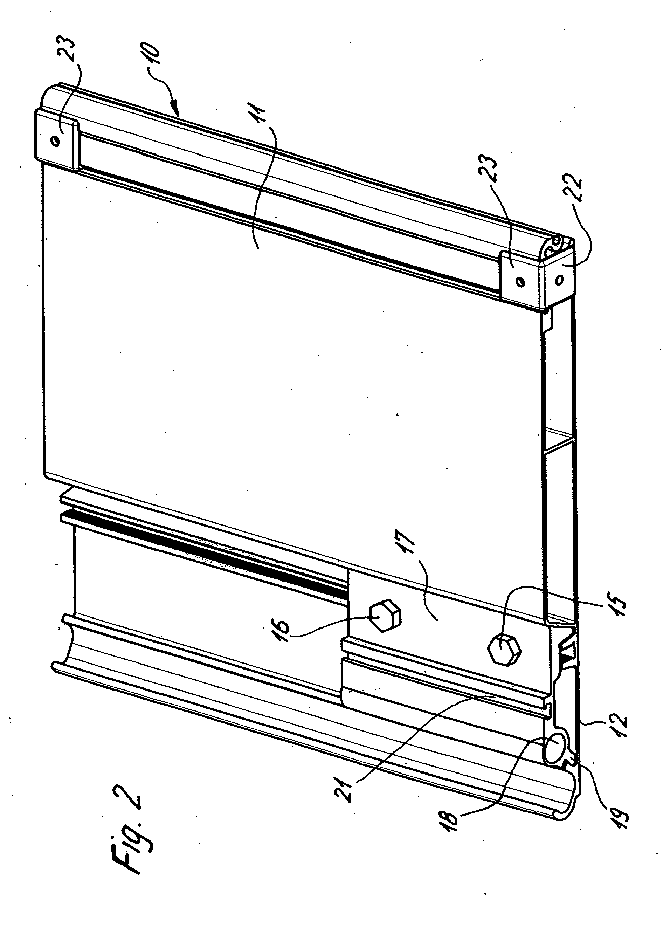

Die in den Figuren 1 bis 4 dargestellte Lamelle 10 besteht aus einem als Hohlprofil ausgebildeten Querschnittsabschnitt 11 und einem flachen Querschnittsabschnitt 12. Die einander abgewandten Randbereiche sind gegensinnig derart hakenförmig ausgebildet, dass die formschlüssige Verbindung erreicht werden kann. Der als Hohlprofil ausgebildete Querschnittsabschnitt 11 weist im mittleren Bereich noch Stabilisierungsstege 13 auf. Angrenzend an den als Hohlprofil ausgebildeten Querschnittsabschnitt 11 ist der flache Querschnittsabschnitt 12 gemäß der Ausführung nach den Figuren 1 und 2 mit Schraubdomen 14 versehen, die zum Inneren des Laderaumes gerichtet und im Abstand zueinander angeordnet sind. In diese Schraubdome 14 sind Befestigungsschrauben 15, 16 eingedreht, um ein dem flachen Querschnittsabschnitt 12 zugeordneten Lagerprofilabschnitt 17 festzulegen.

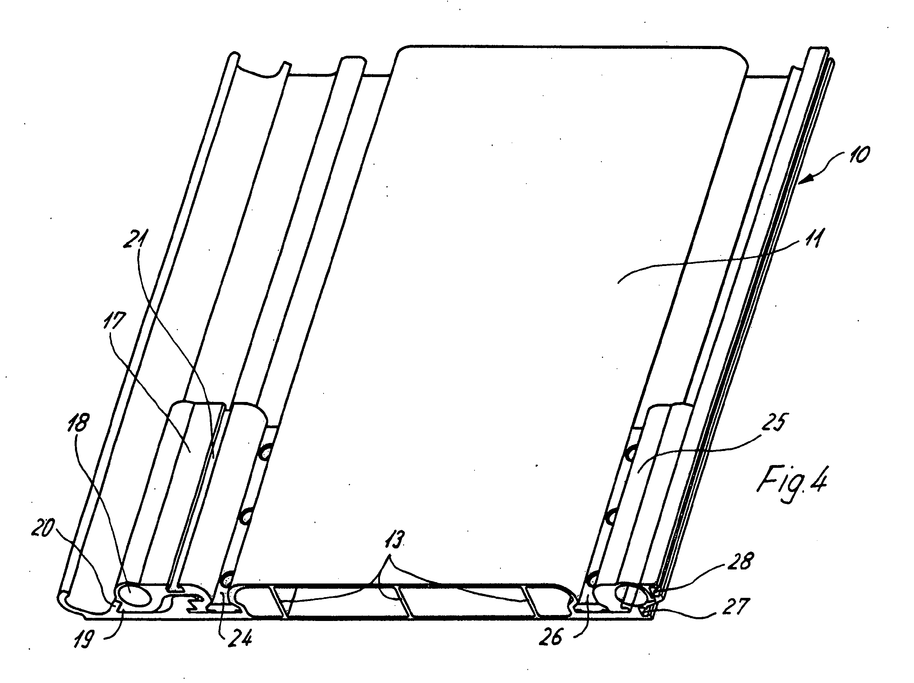

Wie insbesondere die Figuren 2 und 4 zeigen, erstrecken sich im dargestellten Ausführungsbeispiel die Lagerprofilabschnitte 17 über die randseitigen Bereiche jeder Lamelle 10. Entgegen der Darstellung könnte jedoch ein Lagerprofilstab sich über die gesamte Breite der Lamelle 10 bzw. des plattenförmigen Füllungselementes erstrecken. Jeder Lagerprofilabschnitt 17 kann ein Hohlprofil oder auch ein massives Profil sein, sofern man von der Lagerbolzenaufnahme 18 als Bohrung absieht. In diese Lagerbolzenaufnahme 18 ist ein Lagerbolzen fest eingesetzt, auf dessen freies Ende eine nicht dargestellte Führungsrolle frei drehbar gelagert ist, und die sich in der zugehörigen ortsfesten, nicht dargestellten Laufschiene abwälzt. Es sei noch erwähnt, dass der Durchmesser jeder Führungsrolle größer ist als die Dicke des als Hohlkörper ausgebildeten Querschnittabschnittes 11.

Wie die Figuren 1 und 2 zeigen, ist jeder Lagerprofilabschnitt 17 an der dem Laderaum des Fahrzeuges zugewandten Seite bzw. der Sichtseite abgewandten Seite stufenförmig abgesetzt, wobei die Dicke im Bereich des dem als Hohlprofil ausgebildeten Querschnittsabschnittes 11 geringer ist als der restliche Bereich, so dass die Köpfe der Befestigungsschrauben 15, 16 gegenüber der zugeordneten Fläche der Lamelle bzw. des Lagerprofilabschnittes 17 nicht überstehen.

An dem die Lagerbolzenaufnahme 18 begrenzenden Bereich des Lagerprofilabschnittes 17 ist ein Sicherungssteg 19 angeformt, der dem flachen Querschnittsabschnitt 12 zugewandt und dem als Hohlprofil ausgebildeten Querschnittsabschnitt 11 abgewandt liegt. Der Randbereich des flachen Querschnittabschnittes 12 verläuft jedoch bogenförmig, so dass dieser Sicherungssteg einen Steg 20 hintergreift. Wie insbesondere die Figur 1 zeigt, wird dadurch jeder Lagerprofilabschnitt 17 an beiden Randbereichen festgelegt.

Wie die Figuren zeigen, ist jeder Lagerprofilabschnitt 17 mit einer T-Nut 21 ausgestattet, die quer zur Verschieberichtung verläuft. In diese T-Nut 21 kann in nicht dargestellter Weise eine Aushaksicherung festgelegt werden, die bewirkt, dass der Verbindungsbereich von zwei angrenzenden Lamellen 10 so gesichert wird, dass nur eine Trennung möglich ist, wenn diese Aushaksicherung entfernt wird. Diese Aushaksicherung ist nicht zwingend notwendig, da die miteinander gelenkig zu verbindenden Randbereiche der Lamellen 10 so gestaltet sind, dass eine formschlüssige Verbindung gegeben ist.

In die gelenkige Verbindung von zwei benachbarten Lamellen 10 wird üblicherweise noch eine Profildichtung aus einem entsprechenden Kunststoff oder einem Gummi eingesetzt. Um diese gegen eine Verschiebung quer zur Verschieberichtung der Lamellen 10 zu sichern, werden in die Verbindungsbereiche der Lamellen 10 stirnseitig Anlaufscheiben 22 angesetzt. Um diese Anlaufscheiben 22 an der Lamelle 10 festzulegen, ist jede Anlaufscheibe 22 mit einem im Winkel dazu stehenden Befestigungssteg 23 versehen, der an der dem Laderaum des Fahrzeugs zugewandten Seite liegt. Aus der Anlaufscheibe 22 und dem Befestigungssteg 23 wird demzufolge ein Sicherungswinkel gebildet. Die Anlaufsscheibe 22 und der zugehörige Befestigungssteg 23 sind vorzugsweise aus dem gleichen Material wie die Lamellen 10 gefertigt.

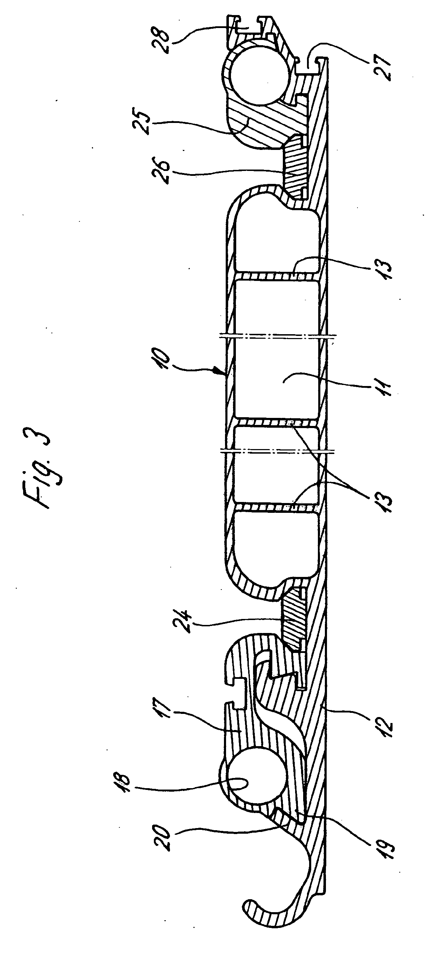

Die Figuren 3 und 4 zeigen die unterste Lamelle des plattenförmigen Führungselementes, das heißt, die dem Boden des Fahrzeugs zugewandte Lamelle. Auch diese Lamelle hat einen als Hohlkörper ausgebildeten Querschnittsabschnitt 11 und einen flachen Querschnittsabschnitt 12. Der wesentliche Unterschied liegt darin, dass die Lagerprofilabschnitte 17 mittels Klemmleisten 24 form- und/oder kraftschlüssig festgelegt sind. Dazu sind die einander zugewandten Flächen der Lagerprofilabschnitte 17 und des als Hohlprofil ausgebildeten Querschnittabschnittes 11 derart gewölbt, dass sich der untere Bereich dieses Freiraumes querschnittsmäßig vergrößert. Der Vorteil dieser Ausführung lieg darin, dass keine mechanischen Verbindungselemente notwendig werden.

In den Figuren 3 und 4 ist die untere Lamelle des Fahrzeugrolltores dargestellt. Da ansonsten die Lagerbolzenaufnahmen im Randbereich jeder Lamelle angeordnet sind, und die Lamellen miteinander gelenkig verbunden sind, ist eine ausreichende Führung durch die Führungsrollen gegeben. Der der Lagerbolzenaufnahme gegenüberliegende Randbereich der Lamelle ist jedoch nicht geführt. Es ist deshalb vorgesehen, dass an dem unteren, dem Boden zugeordneten Randbereich weitere Lagerprofilabschnitte 25 angebracht werden. Diese Lagerprofilabschnitte 25 sind so gestaltet, dass sie mit Klemmleisten 26 festgelegt werden können. In bevorzugter Ausführung sind die Klemmleisten 24 und 26 querschnittsgleich. Durch die Anbringung der Lagerprofilabschnitte 25 wird die untere Lamelle durch vier Führungsrollen geführt. Wie insbesondere die Figur 3 zeigt, ist diese Lamelle 10 noch mit zwei Nuten 27, 28 ausgestattet, in die Profildichtungen eingezogen werden.

Die Erfindung ist nicht auf das dargestellte Ausführungsbeispiel beschränkt. Wesentlich ist, dass die Lagerbolzen mit den aufgesetzten Führungsrollen als Einheit von den Lamellen 10 abgenommen werden können, in dem die Verbindungen zwischen den Lamellen 10 und den Lagerprofilabschnitten 17 durch Lösen der Schrauben 15, 16 gelöst wird.

### Bezugszeichen

- Lamellen: 10
- Querschnittsabschnitt: 11
- Querschnittsabschnitt: 12
- Stabilisierungsstege: 13
- Schraubdomen: 14
- Befestigungsschrauben: 15, 16
- Lagerprofilabschnitt: 17
- Lagerbolzenaufnahme: 18
- Sicherungssteg: 19
- Steg: 20
- T-Nut: 21
- Anlaufscheiben: 22
- Befestigungssteg: 23
- Klemmleiste: 24
- Lagerprofilabschnitte: 25
- Klemmleiste: 26
- Nuten: 27,28

## Patentansprüche

1. Fahrzeugrolltor mit einem plattenförmigen Füllungselement, welches aus Lamellen (10) besteht, deren einander zugewandte, quer zur Verschieberichtung verlaufende Randbereiche gelenkig miteinander verbunden sind, und bei dem die Lamellen (10) durch seitlich nach außen im Versatz zu den beiden Stirnflächen der Lamellen (10) stehende Führungsrollen geführt sind, die in in Verschieberichtung des Füllungselementes verlaufende, ortsfeste sowie lagegerecht zu den Führungsrollen stehende Laufschienen eingreifen, und bei dem die Führungsrollen auf Lagerbolzen frei drehbar gelagert sind, die in Lagerbolzenaufinahmen (18) des Füllungselementes eingesetzt sind, die in abnehmbar an den Lamellen (10) angesetzten Lagerprofilabschnitten (17) vorgesehen sind, **dadurch gekennzeichnet, dass** jede Lamelle (10), im Querschnitt gesehen, einen flachen Querschnittsabschnitt (12) und einen als Hohlprofil augebildeten Querschnittsabschnitt (11) aufweist, und dass zwischen den einander zugewandten Flächen jedes Lagerprofilabschnittes (17) und dem als Hohlprofil ausgebildeten Querschnittsabschnitt (11) ein Freiraum vorgesehen ist, in den zur Festlegung der Lagerprofilabschnitte (17) Klemmleisten (24) form- und/oder kraftschlüssig eingesetzt sind.

2. Fahrzeugrolltor nach Anspruch 1, **dadurch gekennzeichnet, dass** der Freiraum zwischen den einander zugewandt liegenden Flächen der Lagerprofilabschnitte (17) und dem als Hohlprofil ausgebildeten Querschnittsabschnitt (11) sich zumindest in dem dem flachen Querschnittsabschnitt (12) zugewandten Bereich in Richtung zu diesem Bereich querschnittsmäßig vergrößert, und dass jeder Lagerprofilabschnitt (17) an dem flachen Querschnittsabschnitt (12) festgelegt ist.

3. Fahrzeugrolltor nach Anspruch 1 oder 2, **dadurch gekennzeichnet, dass** die einander zugewandten Flächen der Lagerprofilabschnitte (17) und dem als Hohlprofil ausgebildeten Querschnittsabschnitt (11) bogenförmig verlaufen.

4. Fahrzeugrolltor nach Anspruch 3, **dadurch gekennzeichnet, dass** der flache Querschnittsabschnitt (12) einwandig ausgebildet ist, und dass der freie, dem als Hohlprofil ausgebildeten Querschnittsabschnitt (11) abgewandt liegende Randbereich hakenförmig ausgebildet ist.

5. Fahrzeugrolltor nach einem oder mehreren der vorhergehenden Ansprüche 1 bis 4, **dadurch gekennzeichnet, dass** jeder Lagerprofilabschnitt (17) an der dem flachen Querschnittsabschnitt (12) zugewandten Seite und an der dem als Hohlprofilabschnitt ausgebildeten Querschnittsabschnitt (11) abgewandten Seite einen Steg des flachen Querschnittabschnittes hintergreifenden Sicherungssteg (19) aufweist.

6. Fahrzeugrolltor nach einem oder mehreren der vorhergehenden Ansprüche 1 bis 5, **dadurch gekennzeichnet, dass** jeder Lagerprofilabschnitt (17) als Hohlprofilabschnitt oder als massiver Abschnitt ausgebildet ist, dass die dem flachen Querschnittsabschnitt (12) jeder Lamelle (10) abgewandt liegende Fläche stufenförmig abgesetzt ist.

7. Fahrzeugrolltor nach einem oder mehreren der vorhergehenden Ansprüche 1 bis 6, **dadurch gekennzeichnet, dass** jeder Lagerprofilabschnitt (17) an der dem flachen Querschnittsabschnitt (12) abgewandten Seite eine achsparallel zur Lagerbolzenaufnahme (18) verlaufende und hinterschnittene Nut (21) aufweist.

8. Fahrzeugrolltor nach Anspruch 7, **dadurch gekennzeichnet, dass** die Nut (21) als T-Nut ausgebildet ist.

9. Fahrzeugrolltor nach einem oder mehreren der vorhergehenden Ansprüche 1 bis 8, **dadurch gekennzeichnet, dass** jede Lamelle (10) an der dem flachen Querschnittsabschnitt (12) abgewandt liegenden Seitenbereich eine sich zumindest über die Stirnfläche erstreckende Anlaufscheibe (22) zur Sicherung einer in den Verbindungsbereichen von zwei angrenzenden Lamellen (10) eingesetzten Dichtung aufweist.

10. Fahrzeugrolltor nach Anspruch 9, **dadurch gekennzeichnet, dass** die Anlaufscheibe (22) einen im Winkel dazu stehenden Befestigungssteg (23) aufweist, der an der dem inneren des Fahrzeugaufbaues zugewandt liegenden Bereich der Lamelle (10) übergreift.

11. Fahrzeugrolltor nach einem oder mehreren der vorhergehenden Ansprüche 1 bis 10, **dadurch gekennzeichnet, dass** die bodenseitige Lamelle (10) des Fahrzeugrolltores an beiden quer zur Verschieberichtung verlaufenden Randbereichen angrenzend an die Stirnflächen mit abnehmbaren Lagerprofilabschnitten (25) versehen ist.

12. Fahrzeugrolltor nach einem oder mehreren der vorhergehenden Ansprüche, **dadurch gekennzeichnet, dass** jeder Lagerprofilabschnitt (17) an der dem Laderaum des Aufbaues eines Nutzfahrzeuges zugewandten inneren Seite der jeweiligen Lamelle (10) festgelegt ist.

13. Fahrzeugrolltor nach einem oder mehreren der vorhergehenden Ansprüche, **dadurch gekennzeichnet, dass** die Lagerprofilabschnitte (17) sich über die Randbereiche der Lamellen (10) erstrecken

## Claims

1. Vehicle roller door having a plate-shaped panel element which is composed of lamellae (10) whose edge regions which face towards one another and which run transversely with respect to the movement direction are articulatedly connected to one another, and in which panel element the lamellae (10) are guided by guide rollers which project laterally outwards with an offset in relation to the two end surfaces of the lamellae (10), which guide rollers engage into positionally fixed running rails which run in the movement direction of the panel element and which are positioned correspondingly to the guide rollers, and in which panel element the guide rollers are mounted in a freely rotatable manner on bearing journals which are inserted into bearing journal receptacles (18) of the panel element, which bearing journal receptacles (18) are provided in bearing profile portions (17) seated removably on the lamellae (10), **characterized in that** each lamella (10), as viewed in cross section, has a flat cross-sectional portion (12) and a cross-sectional portion (11) formed as a hollow profile, and **in that** a clearance is provided between the surfaces, which face towards one another, of each bearing profile portion (17) and the cross-sectional portion (11) formed as a hollow profile, into which clearance clamping strips (24) are inserted in a positively locking and/or non-positively locking fashion in order to fix the bearing profile portions (17).

2. Vehicle roller door according to Claim 1, **characterized in that** the clearance between the surfaces, which face towards one another, of the bearing profile portions (17) and the cross-sectional portion (11) formed as a hollow profile is enlarged in cross section, at least in the region facing towards the flat cross-sectional portion (12), in the direction of said region, and **in that** each bearing profile portion (17) is fixed to the flat cross-sectional portion (12).

3. Vehicle roller door according to Claim 1 or 2, **characterized in that** the surfaces, which face towards one another, of the bearing profile portions (17) and the cross-sectional portion (11) formed as a hollow profile run in an arc-shaped fashion.

4. Vehicle roller door according to Claim 3, **characterized in that** the flat cross-sectional portion (12) is of single-walled design, and **in that** the free edge region, which is situated facing away from the cross-sectional portion (11) formed as a hollow profile, is of hook-shaped design.

5. Vehicle roller door according to one or more of the preceding Claims 1 to 4, **characterized in that** each bearing profile portion (17) has, on the side facing towards the flat cross-sectional portion (12) and on the side facing away from the cross-sectional portion (11) formed as a hollow profile portion, a securing web (19) which engages behind a web of the flat cross-sectional portion.

6. Vehicle roller door according to one or more of the preceding Claims 1 to 5, **characterized in that** each bearing profile portion (17) is formed as a hollow profile section or as a solid section, **in that** that surface which is situated facing away from the flat cross-sectional portion (12) of each lamella (10) has a stepped offset.

7. Vehicle roller door according to one or more of the preceding Claims 1 to 6, **characterized in that** each bearing profile portion (17) has, at the side facing away from the flat cross-sectional portion (12), an undercut groove (21) which runs axially parallel to the bearing journal receptacle (18).

8. Vehicle roller door according to Claim 7, **characterized in that** the groove (21) is formed as a T-shaped groove.

9. Vehicle roller door according to one or more of the preceding Claims 1 to 8, **characterized in that** each lamella (10) has, on the side region situated facing away from the flat cross-sectional portion (12), a stop disc (22) which extends at least over the end surface and which serves to secure a seal which is inserted into the connecting regions of two adjacent lamellae (10).

10. Vehicle roller door according to Claim 9, **characterized in that** the stop disc (22) has a fastening web (23) which is aligned at an angle relative to said stop disc (22) and which engages over that region of the lamella (10) which is situated facing towards the interior of the vehicle body.

11. Vehicle roller door according to one or more of the preceding Claims 1 to 10, **characterized in that** the floor-side lamella (10) of the vehicle roller door is provided, at the two edge regions which run transversely with respect to the movement direction adjacent to the end surfaces, with removable bearing profile portions (25).

12. Vehicle roller door according to one or more of the preceding claims, **characterized in that** each bearing profile portion (17) is fixed to the inner side, which faces towards the loading bay of the body of a utility vehicle, of the respective lamella (10).

13. Vehicle roller door according to one or more of the preceding claims, **characterized in that** the bearing profile portions (17) extend over the edge regions of the lamellae (10).

## Revendications

1. Porte roulante de véhicule, comportant un élément de remplissage en forme de panneau, qui est formé par des lamelles (10), dont les bords, orientés l'un vers l'autre et disposés transversalement à la direction de coulissement, sont assemblés entre eux de manière articulée, et dans lequel les lamelles (10) sont guidées par des galets de guidage, qui sont disposés latéralement vers l'extérieur en décalage avec les deux faces frontales des lamelles (10) et qui s'engagent dans des rails de guidage, orientés dans la direction de coulissement de l'élément de remplissage, disposés de manière fixe et conformément à la position des galets de guidage, et dans lequel les galets de guidage sont montés librement rotatifs sur des boulons d'appui, qui sont insérés dans des logements pour boulon (18) de l'élément de remplissage, lesquels sont prévus dans des parties de profilé d'appui (17) attachées aux lamelles (10), **caractérisée en ce que** chaque lamelle (10), par référence à une coupe transversale, comporte une partie de section (12) plate et une partie de section (11) réalisée en forme de profilé creux, et **en ce qu'**entre les surfaces orientées l'une vers l'autre de chaque partie de profilé d'appui (17) et la partie de section (11) réalisée en forme de profilé creux, il est prévu un dégagement dans lequel sont insérées par conjugaison de forme et/ou par force des baguettes de blocage (24) pour immobiliser les parties de profilé d'appui (17).

2. Porte roulante de véhicule selon la revendication 1, **caractérisée en ce que** le dégagement entre les surfaces orientées l'une vers l'autre des parties de profilé d'appui (17) et la partie de section (11) réalisée en forme de profilé creux, au moins dans la zone orientée vers la partie de section (12) plate, s'agrandit en section en direction de cette zone, et **en ce que** chaque partie de profilé d'appui (17) est fixée à la partie de section (12) plate.

3. Porte roulante de véhicule selon la revendication 1 ou 2, **caractérisée en ce que** les surfaces orientées l'une vers l'autre des parties de profilé d'appui (17) et de la partie de section (11) réalisée en forme de profilé creux s'étendent en forme de courbe.

4. Porte roulante de véhicule selon la revendication 3, **caractérisée en ce que** la partie de section (12) plate est réalisée avec une seule paroi, et **en ce que** le bord libre, opposé à la partie de section (11) réalisée en forme de profilé creux, est réalisé en forme de crochet.

5. Porte roulante de véhicule selon une ou plusieurs des revendications 1 à 4, **caractérisée en ce que** chaque partie de profilé d'appui (17), sur le côté orienté vers la partie de section (12) plate et sur le côté opposé à la partie de section (11) réalisée en forme de profilé creux, comporte une nervure de blocage (19) s'engageant derrière la nervure de la partie à section plate.

6. Porte roulante de véhicule selon une ou plusieurs des revendications 1 à 5, **caractérisée en ce que** chaque partie de profilé d'appui (17) est réalisée sous la forme d'une partie de profilé creux ou d'une partie pleine, **en ce que** la surface, opposée à la partie de section (12) plate de chaque lamelle (10), est étagée en forme de gradins.

7. Porte roulante de véhicule selon une ou plusieurs des revendications 1 à 6, **caractérisée en ce que** chaque partie de profilé d'appui (17), sur le côté opposé à la partie de section (12) plate, comporte une rainure (21) détalonnée et orientée parallèlement à l'axe du logement pour boulon (18).

8. Porte roulante de véhicule selon la revendication 7, **caractérisée en ce que** la rainure (21) est réalisée sous la forme d'une rainure en T.

9. Porte roulante de véhicule selon une ou plusieurs des revendications 1 à 8, **caractérisée en ce que** chaque lamelle (10), dans la zone latérale opposée à la partie de section (12) plate, comporte une plaque de butée (22), s'étendant au moins sur la face frontale et destinée à bloquer un joint d'étanchéité posé dans les zones de jonction de deux lamelles (10) adjacentes.

10. Porte roulante de véhicule selon la revendication 9, **caractérisée en ce que** la plaque de butée (22) comporte une nervure de fixation (23), qui est disposée en angle par rapport à ladite plaque de butée et qui s'engage au-dessus de la zone de la lamelle (10), orientée vers l'intérieur de la caisse du véhicule.

11. Porte roulante de véhicule selon une ou plusieurs des revendications 1 à 10, **caractérisée en ce que** la lamelle (10) du côté du fond de la porte roulante est munie sur les deux bords, orientés transversalement à la direction de coulissement, de parties de profilé d'appui (25) amovibles, adjacentes aux faces frontales.

12. Porte roulante de véhicule selon une ou plusieurs des revendications précédentes, **caractérisée en ce que** chaque partie de profilé d'appui (17) est fixée sur la lamelle (10) correspondante, à savoir sur sa face intérieure orientée vers le compartiment de chargement de la caisse d'un véhicule utilitaire.

13. Porte roulante de véhicule selon une ou plusieurs des revendications précédentes, **caractérisée en ce que** les parties de profilé d'appui (17) s'étendent sur les bords des lamelles (10).
